# EUROPEAN PATENT APPLICATION

(11) **EP 1 396 418 A2**
(43) Date of publication of application: **10.03.2004**
(21) Application number: 03076057.3
(22) Date of filing: 11.04.2003
(51) Int. Cl.: B62J 17/06

(54) **Leg protective sheet for two wheeled vehicles**

(30) Priority: 04.09.2002 IT MI20021885
(71) Applicant: PIAGGIO & C. S.p.A., 56025 Pontedera (Pisa) (IT)
(72) Inventor: Bagnoli, Alessandro, 56030 Perignano di Lari (Pisa (IT)
(74) Representative: De Gregori, Antonella

(57) **Abstract**

The invention relates to a leg-protective sheet for a two-wheeled vehicle (30) provided with bodywork (31), the leg-protective sheet (10) having a trapezoidal shape which comprises a first base edge (12), provided for contact with the user, a second base edge (14), to be connected to the two-wheeled vehicle, and two inclined edges (13) for connecting the two base edges (12, 14), the second base edge (14) being provided with a seam or ridge (16) to be slotted between a shield (32) and a counter-shield (33) of the front portion of the bodywork (31) of the two-wheeled vehicle (30).

## Description

The present invention relates to a leg-protective sheet for two-wheeled vehicles.

In particular, the invention relates to a leg-protective sheet for a two-wheeled vehicle with bodywork, such as a scooter, for protection of the rider from rain and air, the said sheet being equipped with means for connection to the scooter, which are easy to fix in place and enable optimal integration with the vehicle.

In the last few years, it has been possible to note a considerable increase in the number of two-wheeled vehicles in circulation, in particular, vehicles having bodywork, such as scooters, which provide a certain degree of protection to the user, enabling him to move about wearing normal clothes without having to use dedicated sports-type motor-cycling gear.

It is, therefore, convenient to equip the vehicle with means of protection which, in the case of adverse weather conditions, prevent damage to the rider's clothing and render the journey more comfortable for the user.

Amongst the devices currently in use, there have recently been proposed leg-protective sheets to be fixed onto the vehicle mostly by means of fastening with laces or straps; this involves a series of disadvantages, such as a certain degree of imprecision in their application to the vehicle, noise whilst the vehicle is travelling, reduction in streamlining of the vehicle and, not least, as regards the commercial success of the device, the low attractiveness of a sheet having laces and straps.

The purpose of the present invention is to solve the aforesaid drawbacks of the prior art by providing a leg-protective sheet equipped with means of connection that are simple to fix to the vehicle and which make possible an optimal integration with two-wheeled vehicles equipped with bodywork.

The above and other purposes according to the present invention are achieved by the leg-protective sheet for two-wheeled vehicle according to Claim 1.

Further characteristics of the invention form the subject of the dependent claims.

The leg-protective sheet for two-wheeled vehicles according to the invention has a trapezoidal shape and comprises a first base edge, provided for contact with the user, a second base edge, to be connected to the two-wheeled vehicle, and two inclined edges for connecting the two base edges, the second base edge being provided with a seam or ridge to be slotted between a shield and a counter-shield of the front portion of the bodywork of the two-wheeled vehicle.

The structural and functional characteristics and advantages of the leg-protective sheet for two-wheeled vehicles according to the invention will emerge more evidently from the ensuing description, which is provided merely by way of non-limiting example, with reference to the annexed schematic drawings, in which:
- Figure 1 is a side elevation view of a two-wheeled vehicle equipped with bodywork carrying a leg-protective sheet according to the present invention;
- Figure 2 is a view of the leg-protective sheet according to the present invention in a distended condition;

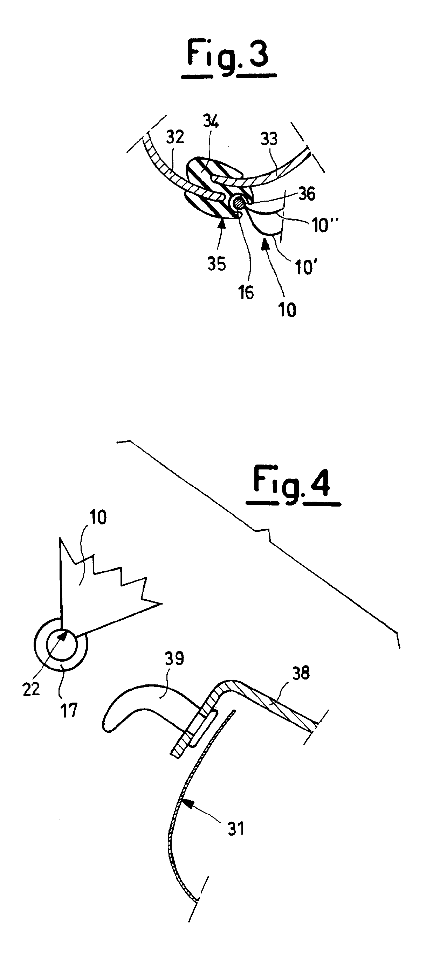

- Figure 3 is a cross-sectional view, taken according to the line III-III of Figure 1, of a detail of connection of the leg-protective sheet to the bodywork of a two-wheeled vehicle; and
- Figure 4 is a cross-sectional view, taken according to the line IV-IV of Figure 1, of another detail of the connection of the leg-protective sheet to the foot-board of a two-wheeled vehicle.

With reference to the figures mentioned above, a leg-protective sheet 10 is shown having a trapezoidal shape and defined by a first base edge 12, provided for contact with the abdomen of the user, a second base edge 14, to be connected to a two-wheeled vehicle 30, and two inclined edges 13 for connecting the two base edges 12, 14 .

The second base edge 14 is provided with a seam or ridge 16, which preferably has a cylindrical cross-section and is made of rubber or some other material suitable for being slotted into and possibly slid within a groove 36 made in the outer edge 35 of a butt strap 34.

The aforesaid butt strap 34 forms a seal and a connection between a shield 32 and a counter-shield 33, which the two-wheeled vehicle 30 has in the front portion of its bodywork 31.

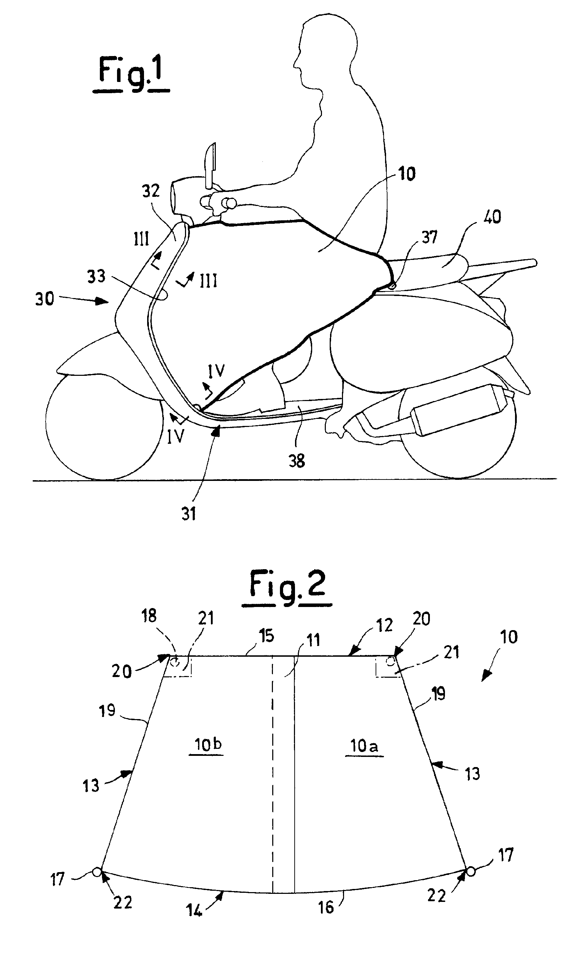

The second base edge 14 may be made with a rectilinear profile or have a shaped profile (as illustrated in Figure 2) to enable it to adapt better to the profile of the bodywork of the vehicle.

The leg-protective sheet is preferably made of two symmetrical parts, a right-hand part 10a and a lefthand part 10b, joined, for example, by a band of Velcro set in a strip 11 which extends in a central position between the two base edges 12, 14.

The leg-protective sheet may, however, be made of a single piece of sheet.

To perform its protective function, the leg-protective sheet 10 has the surface facing outwards made of waterproof material or else may be made of a number of layers 10', 10" set on top of one another of which at least one is made of waterproof material.

Anchorage of the sheet in the area of the first base edge 12 is obtained by anchoring means consisting of a press-stud 18 set in the vicinity of each vertex 20 of the sheet between the first base edge 12 and one of the two inclined edges 13 which enable the leg-protective sheet 10 to be fixed to the saddle 40 of the vehicle.

For this purpose, there is appropriately arranged on the saddle 40 of the vehicle, for each press-stud 18, a corresponding press-stud socket 37 which receives the shank or ball of the press-stud.

In a different embodiment of the invention the press-stud 18 and the corresponding socket 37 are replaced by a eyelet and a hook which may indifferently belong one to the sheet and the other to the saddle.

According to a different embodiment of the invention, any modification of the saddle of the vehicle is avoided by opting for fixing of the first base edge 12 directly on the abdomen of the user by means of Velcro flaps 21 arranged in the proximity of the aforesaid vertices 20.

To enable better adherence to the abdomen of the user, an elastic element 15 may be inserted into the first base edge 12.

Advantageously, further similar elastic elements 19 are inserted along the inclined edges 13 so as to cause a ruff, which, by gathering said edges of the sheet towards the inside of the bodywork, limit the possibility of the sheet flapping and being raised as a result of the aerodynamic negative pressure caused by the fact that the vehicle is travelling.

To improve tightness of the slot-type fit which withholds the second base edge 14, the leg-protective sheet 10 further comprises an eyelet 17 set in the proximity of each vertex 22 between the inclined edges 13 and the second base edge 14 for fixing the leg-protective sheet 10 to the foot-board 38 set at the base of the bodywork 31, on which there is appropriately arranged a hook 39 for each side of the vehicle.

## Claims

1. A leg-protective sheet for a two-wheeled vehicle (30) provided with bodywork (31), said leg-protective sheet (10) having a trapezoidal shape which comprises a first base edge (12), provided for contact with the user, a second base edge (14), to be connected to the two-wheeled vehicle, and two inclined edges (13) for connecting the two base edges (12, 14), **characterized in that** said second base edge (14) is provided with a seam or ridge (16) to be slotted between a shield (32) and a counter-shield (33) of the front portion of the bodywork (31) of the two-wheeled vehicle (30).

2. The leg-protective sheet according to Claim 1, **characterized in that** said second base edge (14) has a shaped profile for adapting to the shape of the bodywork of the vehicle.

3. The leg-protective sheet according to Claim 1, **characterized in that** it further comprises anchoring means made along the first base edge (12).

4. The leg-protective sheet according to Claim 3, **characterized in that** said anchoring means comprise a pair of press-studs (18) each set in the proximity of a vertex (20) between the first base edge (12) and one of the two inclined edges (13) for fixing the leg-protective sheet (10) to a corresponding housing (37) pre-arranged on each side of the saddle (40) with which the vehicle is equipped.

5. The leg-protective sheet according to Claim 3, **characterized in that** said anchoring means comprise a pair of Velcro flaps (21) to enable fixing of the first base edge (12) directly around the abdomen of the user.

6. The leg-protective sheet according to Claim 1, **characterized in that** said sheet is equipped, along the first base edge (12) and/or along the inclined edges (13), with elastic elements (15, 19).

7. The leg-protective sheet according to Claim 1, **characterized in that** it further comprises an eyelet (17) set in the proximity of each vertex (22) between the inclined edges (13) and the second base edge (14) in order to fix the leg-protective sheet (10) to the foot-board (38) set at the base of the bodywork (31), there being appropriately provided on said foot-board a hook (39) designed to engage said eyelet (17).

8. The leg-protective sheet according to Claim 1, **characterized in that** it is made of two symmetrical parts (10a, 10b) joined by means of a Velcro strip (11), which extends in a central position between the two base edges (12, 14).

9. The leg-protective sheet according to Claim 1, **characterized in that** it is made of waterproof material.

10. The leg-protective sheet according to Claim 9, **characterized in that** it is made of one or more superimposed layers (10', 10").
